# EUROPEAN PATENT SPECIFICATION

(11) **EP 2 539 073 B1**
(45) Date of publication and mention of the grant of the patent: **17.12.2014**
(21) Application number: 11708750.2
(22) Date of filing: 21.02.2011
(51) Int. Cl.: G01N 33/543, B01L 3/00, B29C 45/16

(54) **MULTIWELL STRIPS**
MULTI-BEHÄLTER STREIFEN
LAMELLE AUX MULTIPUITS

(30) Priority: 22.02.2010 EP 10154255
(43) Date of publication of application: 02.01.2013
(73) Proprietor: 4titude Ltd., Wotton Surrey Rh56QT (GB)
(72) Inventor: DAY, Paul, Dorking RH5 6NR (GB); COLLINS, Peter, Shamley Green GU5 0TP (GB); LERNBECHER, Thomas, Reigate RH2 0GL (GB)
(74) Representative: Fanelli Haag Kilger PLLC
(86) International application number: PCT/EP2011/052507
(87) International publication number: WO 2011/101467

(56) References cited:
- EP-A1- 2 353 717
- EP-A2- 0 844 025
- EP-A2- 1 053 790
- EP-A2- 1 316 360
- EP-B1- 1 161 994
- DE-U1- 20 210 900

## Description

### Technical field

The present invention relates to multiwell strips. In particular the invention relates to multiwell strips consisting of two materials.

### Background of the Invention

Molecular biological research and clinical diagnostic procedures and techniques require wells and tubes with small volumes for qualitative and quantitative assays and/or for sample storage and retrieval. Furthermore, in order to handle multiple samples at a time prior art devices provide so called multiwell strips with eight wells arranged in a line (e.g. US D445,907 S). These multiwell strips commonly consist of material which has to be chosen for its ability for thermal transfer and resistance. Prior art devices commonly consist of polypropylenes (PP). However, PP is of low stiffness and prone to heat distortion. Thus, prior art multiwell strips are difficult to handle and not suited for automated procedures recruiting robotics.

Thus, there is a need for multiwell strips providing both, wells suited for sample processing, and allowing easy handling and automation.

Document EP 1161994 discloses a micro-titer plate having a frame of a stiff first plastic and a plurality of wells from a second plastic, which is suitable for PCR temperatures. Docu=iment EP1053790 discloses a multiwell plate with predetermined breaking lines.

### Description of the invention

The present invention now provides a multiwell strip (1) according to claims 1 to 3, a multiwell frame according to claims 4 to 7 or a method for producing a multiwell strip according claim 8 or a use of a multiwell strip according to claim 9 or 10.

By "stiffer" in context of the present invention it is meant that the frame portion (2) confers the strip a rigidity, strength and straightness required for easy handling and robotic manipulation, However, the wells (3) in which the samples are placed have other desired properties. As they are often used in procedures employing heat they have to withstand high temperatures and at the same time provide good thermal diffusivity. This is achieved by the present invention by providing different materials for the frame portion (2) and the wells (3).

By "different materials" in context with the present invention it is meant that the first and the second material differ in their physical properties. In a preferred embodiment said physical property is a higher stiffness of the first material when compared to the second material. The higher stiffness is due to a different thickness of the first material and by using different substances for the first and the second material.

"Thermal diffusivity" describes the ability of a material or substances to rapidly adjust their temperature to that of their surroundings and thereby transfer the temperature from one side of the material to another, because they conduct heat quickly in comparison to their volumetric heat capacity..

A possibility to modify the thermal diffusivity is the thickness of the material. The thinner a material is the faster the temperature of the surroundings is transferred into the inner portion of the well. Thus the wells (3) of the multiwell strip (1) are relatively thin to facilitate optimal thermal transfer to samples during thermal cycling procedures. According to the Invention the receiving portions (5) of the wells (3) have a wall-thickness of 0.05 mm to 0.5 mm. The skilled artisan will appreciate that by the thin walls and the materials used the multiwell strip (1) according to the present invention permits use of optical detection systems for optically analyzing samples through sample well bottoms.

By these properties the multiwell strip (1) according to the present invention possesses the physical and material properties that render the multiwell strip (1) capable of withstanding high temperature conditions of thermal cycling procedures and conducive for use with automated equipment as well as manual handling.

The shape of the wells (3), and accordingly the shape of the receiving portion, can be adjusted to the need of the procedures and methods the multiwell strip (1) is used in, e.g. for use in thermocyclers the wells (3) have to be usually cup- or u-shaped or v-shaped, whereas for ELISA the wells (3) are often flat bottomed. Thus, in a preferred embodiment the multiwell strip (1) according to the present invention the receiving portions (5) of the wells (3) have a substantially cup-shaped bottom or v-shaped or flat or u-shaped or pyramid shaped.

The skilled artisan will unambiguously recognize that the multiwell strip (1) according to the present invention by providing the stiff frame can easily be handled manually as well as by robotic and automated devices. However, the handling may be eased by adding a frame wall (6) to at least one side of the frame. The frame wall (6) may extend from the planar top surface of the frame portion (2) to the bottom of the multiwell strip (1) or it may be shorter so that the bottom of the wells (3) form the bottom of the strip. Multiweil strips are often handled at the narrow sides as they are easily accessible when several multiwell strips are placed e.g. in a thermocycler. Thus, in a preferred embodiment of the present invention the frame portion (2) comprises a frame wall (6) at one or both of its narrow sides and in a further embodiment the frame portion (2) comprises a frame wall (6) at one or both of its long sides.

The skilled artisan is aware of the fact that in order to identify different samples the strips have to be labelled in an unambiguous way. The present invention provides an improved multiwell strip (1), which can be labelled due to the advanced properties of the frame portion (2). As the frame portion (2) consists of a stiffer material than the wells (3) and the multiwell strips of prior art, it provides a stiff and rigid underground for labelling of the multiwell strip (1). The at least one frame wall (6) present in the preferred embodiment of the present invention provides a further surface for the labelling of the multiwell strip (1). In a preferred embodiment of the present invention, at least one label to identify the multiwell strip (1) and/or the wells (3) is attached to the at least one frame wall (6) of the frame. In a more preferred embodiment a bar-code or two-dimensional bar-code for identifying the multiwell strip (1) and/or the wells (3) is attached to at least one frame wall (6). The skilled person will recognize that the bar-code simplifies the identification of the multiwell strip (1) and/or the wells (3) by automation devices such as robotics.

In one embodiment of the invention the wells (3) are interlinked by the second material. The wells (3) may be interlinked by thin connections or bars consisting of the second material. In another embodiment the wells (3) are interlinked by an essentially planar deck consisting of the second material.

The skilled person will recognize that the advantages provided by the present invention are not limited to a specific format of wells (3) and strips. Nevertheless, in a preferred embodiment the multiwell strip (1) according to the present invention is designed for the use in common systems. These commonly used systems have standard dimensions for the measurements of multiwell strips (1) with respect to e.g. the distance between the wells (3), the dimensions and design of the wells (3). The skilled person is aware of the standards, e.g. ANSI/SBS 4-2004, "Microplates - Well Position" (http://www.sbsonline.com/msdc/pdf/ANSI_5BS_4-2004.pdf). The standards govern various characteristics of a microplate including well dimensions (e.g. diameter, spacing and depth). Thus, in a preferred embodiment the dimensions of the wells (3) and/or the spacing of the wells (3) meet(s) the standards of ANSI/SBS 1-2004 through ANSI/SBS 4-2004. In a further preferred embodiment the spacing of one well to another with respect to the centre of the wells (3) is selected from the group consisting of 9 mm, 4.5 mm and 2.25 mm.

In a further embodiment of the present invention the narrow sides and the broad sides of the multiwell (3) strip according to the present invention have a length ratio of 125 mm to 9 mm, in another embodiment 83 mm to 9 mm.

The person skilled in the art will unambiguously recognize that the volume of the wells (3) may be adapted to the desires of the assay the strip is used in. However, in one embodiment of the present invention each of the wells (3) has a volume of 1 µL to 1000 µL, preferably 2 µL to 200 µL, more preferably 20 µL. to 40µL. In another embodiment each of the wells (3) has a volume of 100 µL, in yet another embodiment a volume of 200 µL.

The person skilled in the art will recognize that the strip according to the present invention is not limited to a specific number of wells arranged in said line. However, in one embodiment of the present invention the multiwell strip (1) has between 2 and 48 wells (3). In a preferred embodiment the strip has 2, 3,4, 6, 8, 12, 16, 24, 32 or 48 wells (3).

For the identification of the strips in non automated processes, e.g. by the person handling the samples/strips it is desirable to differentiate the strips and/or the wells (3) visually. One way to differentiate the strips and/or wells (3) is to furnish the strips and/or wells (3) with different colours. In one embodiment of the present invention the first material and the second material have different colours. Furthermore, the strip might be marked in order to identify each well. This might be conducted by placing number at each well or by simply marking one side of the multiwell strip (1). In the preferred embodiment the first material has a colour selected from the group consisting of blue, green, yellow, red, violet, black, white and orange. In a further preferred embodiment the second material is essentially transparent or is black or is white.

The present invention also provides a device for obtaining a multiwell strip (1) as outlined above. It may be desirable for the customer to use more than one strip in an assay. Or the customer might wish to store a plurality of strips in a space-saving way. The skilled person will recognize that providing a multiwell-frame (7) which can be easily separated in one or more strips according to the invention would satisfy said customer's desires.

Thus, the present invention also provides a multiwell-frame (7) for obtaining a multiwell strip (1) according claims 4 to 7.

With respect to the first- and second material, design of holes and wells (3) the multiuvell- frame (7) has the same features as the multiwell strip (1) outlined above.

By "predetermined breaking lines" in context of the present invention it is meant that the multiwell-frame (7) can easily be divided into strips according to the invention. The skilled artisan is aware of ways to produce predetermined breaking lines (9). In a preferred embodiment the predetermined breaking lines (9) may comprise perforation of the first material, thinning of the first material or connections in-between separate strips. Said connections may consist of the first material or of a different material. Furthermore, the connections may have different designs. They may be thin bars reaching from one strip to another or "islands" having a substantially round or elliptic shape and spreading in-between the strips. The connections preferably break directly adjacent to the frame portions (2) of the strips. The number and the material of connections in-between two strips may by chosen according to the desired fortitude of the bond between the strips.

The multiwell-frame (7) may further comprise a frame wall (6) at each side extending from the essentially planar surface downwards. The skilled artisan will recognize that in such a case the predetermined breaking lines (9) may extend also over the frame wall (6). In one embodiment the frame wall (6) is disrupted at the predetermined breaking lines (9). The shape of the disruption is of minor relevance. However, in a preferred embodiment the interruption starts where the predetermined breaking lines (9) encounter the edge of the planar surface of the frame portion (8) and widens downwards resulting in a triangular shape.

The skilled person is able to design and construct "predetermined breaking lines" and is able to determine the fortitude needed to provide both, a multiwell-frame (7) according to the invention with a connection fortitude suited for a save transportation of the multiwell-frame (7) and an easy manual division of the strips. In a preferred embodiment the predetermined breaking lines (9) are designed for manual dividing of the multiwell-frame.

As outlined above in a preferred embodiment the arrangement and design of the holes/wells (3) is chosen to fit in commonly used systems. Common systems used in the field of molecular biological research and clinical diagnostic procedures and techniques are designed in the dimensions of so called 24- well, 32-well, 48-well, 96-well, 384-well or 1536-well tube arrays. Thus, in a preferred embodiment of the present invention the multiwell-frame (7) for obtaining a multiwell strip (1) according to the invention has the dimension selected from the group consisting of 32-well, 24-well, 96-well, 384-well or 1536-well arrays. In a more preferred embodiment the multiwell-frame (7) for obtaining a multiwell strip (1) has the dimension, especially with respect to the center to center distance of the wells (3), as set out in the standard ANSI/SBS 4-2004, which is incorporated herein by reference. In a further preferred embodiment the rectangular pattern of the holes/wells (3) consists of 2 by 8, or 3 by 32 or 4 by 6, or 8 by 12 holes/wells (3), or 16 by 24 holes/wells (3), or 32 by 48 holes/wells (3), or 2 to 31 by 48 holes/wells (3), or 2 to 47 by 32 holes/wells (3), or 2 to 7 by 12 holes/wells (3), or 2 to 11 by 8 holes/wells (3), or 2 to 15 by 24 holes/wells (3), or 2 to 23 by 16 holes/wells (3).

For the person skilled in the art it will be clear that also parts of the multiwell-frame (7) for obtaining a multiwell strip (1) according to the present invention fall under the scope of the present invention. Thus, the multiwell-frame (7) for obtaining a multiwell strip (1) according to the invention may be divided into fragments consisting of more than one multiwell strip (1). Thus, the present invention is not limited to the number of rows or columns divided by predetermined breaking lines (9) comprised in the multiwell-frame (7) for obtaining a multiwell strip (1), As outlined above, it may be desirable to visually identify different multiwell strips according to the present invention. Thus, in a preferred embodiment the first material and the second material of the multiwell-frame (7) for obtaining a multiwell strip (1) according to the present invention has a different colour.

In a more preferred embodiment the first material of the multiwell-frame (7) has a colour selected from the group consisting of blue, green, yellow, red, violet, black, white, and orange, or is essentially transparent. In a further preferred embodiment the multiwell-frame (7) the second material is essentially transparent or is black or white.

In a further embodiment the multiwell strip (1) and the multiwell-frame (7) to obtain the multiwell strip (1) comprises at least one lid for closing the wells (3). The at least one lid for closing the wells (3) may be attached to the frame portion (8) or to the wells (3). The skilled artisan knows different possibilities to place the lid in order to ease the closing of the wells (3). For example there may be lids attached to each well with a flexible linker or the lids may be ordered in a row forming a strip which is attached, optionally through a linker, to one side of the multiwell strip (1) or multiwell-frame (7) in a way to allow closing of the wells (3) in the respective row. For the skilled artisan it is clear that the lid(s) and/or the linker may consist of the same material as they are attached to or may consist of a differently suited material.

The present invention also relates to a method for producing a multiwell strip (1) according to claim 8.

In another method the wells (3) and the frame portion (2) are formed of separate components and permanently joined to form a unitary strip. Thus, the methods of producing a multiwell strip (1) include a further method, wherein a thin-well multiwell-frame (7) is formed as a unitary multiwell frame into two separate manufacturing processes and the thereby produced multiwell-frame (7) is divided into the multiwell strips (1) according to the present invention. Said further method includes providing a first material that is conducive to a first manufacturing process, forming a frame portion (8) or (2) of the first material by the first manufacturing process, wherein the frame portion (8) or (2) includes a plurality of holes formed in a top surface of the frame portion. The method further includes providing a second material that is form suitable for use in the molding process and molding a well and deck portion or separate wells (3) of the second material by the second manufacturing process, wherein the well and deck portion includes a plurality of sample wells (3) formed in a top planar deck of the well and deck portion that are sized for insertion into the plurality of holes of the frame portion. According to said further method for producing, the frame portion (8) or (2) and the well and deck portion or separate wells (3) are joined after their separate manufacture such that the plurality of sample wells (3) is disposed in the plurality of holes. The well and deck portion or wells (3) are permanently adhered to the top surface of the frame portion (8) or (2) to produce the unitary multiwell-frame (7) or multiwell strip (1). If a multiwell-frame (7) is produced, the unitary multiwell-frame (7) is cut into multiwell strips (1), each multiwell strip (1) comprising at least one row or at least one column of wells (3).

The skilled artisan knows methods and procedures to join the first and the second material of the frame portion (8) or (2) and the deck and well portion or separate wells (3), respectively, in order to adhere them permanently. In a preferred embodiment the joining comprises laser beam welding and/or two-shot molding and/or ultrasonic welding and/or gluing and/or by clipping anchors and/or irreversible clips. Ultrasonic welding may be performed by using ultrasonic welding equipment available from Herrmann Ultrasonics, Inc. (US).

In a further embodiment the step of cutting the frame portion (8) into strips and providing the second material are conducted simultaneously.

The skilled artisan knows processes of molding the first and/or second material. One example of a molding technique is two-step injection molding well known to those skilled in the art. Such process is described (Injection Molding, Vol. 8, No. 4, Part 1 of 2, April 2000). The two- step injection molding process may be performed by using various commercially available injection molding presses that are designed for two-step molding processes, such as the SynErgy 2C press (Netstal-Maschinen AG of Naefels, Switzerland; or Netstal-Maehinery, Inc of Devens, Massachusetts). The laser beam welding process may be performed by using various commercially available laser beam welding tools (e.g. from Leister Tech, Switzerland).

The most common manufacturing process is injection molding, used for polystyrene, polypropylene and cyclo-olefine. Furthermore, vacuum forming can be used as well.

In a preferred embodiment the cutting of the frame portion (8) or multiwell-frame (7) is performed along predetermined breaking lines (9) separating each row or column of holes and/or wells (3).

The pattern of holes and/or wells (3) in the method of the present invention may be any pattern as outlined for the multiwell strip (1) or multiwell-frame (7) to obtain the multiwell strip (1) according to the present invention.

The features of the present invention allow for an easy handling of multiwell strips (1) manually as well as automatically. Thus the present invention also relates to the use of a multiwell strip (1) according to the present invention or a multiwell-frame (7) to obtain a multiwell strip (1) according to the present invention in research procedures and diagnostic techniques, preferably in manual research procedures and/or diagnostic techniques, more preferably in automated research procedures and/or diagnostic techniques. In a further preferred embodiment the manual or automatic research procedure and/or diagnostic technique are selected from the group consisting of amplification of nucleic acids, PCR, ELISA, sequencing, high content screening, crystallography, melt curve determination, hybridization related assays, in-vitro translation, in-vitro transcription, cell-culturing, enzymatic assays.

The term "hybridization related assays" stands for assays comprising steps of hybridizing nucleic acids, and/or proteins, and/or of proteins with nucleic acids, and/or ligands with proteins, and/or ligands with nucleic acids.

### Figure Legends

The Figures are shown by way of example only and shall not limit the scope of the invention.

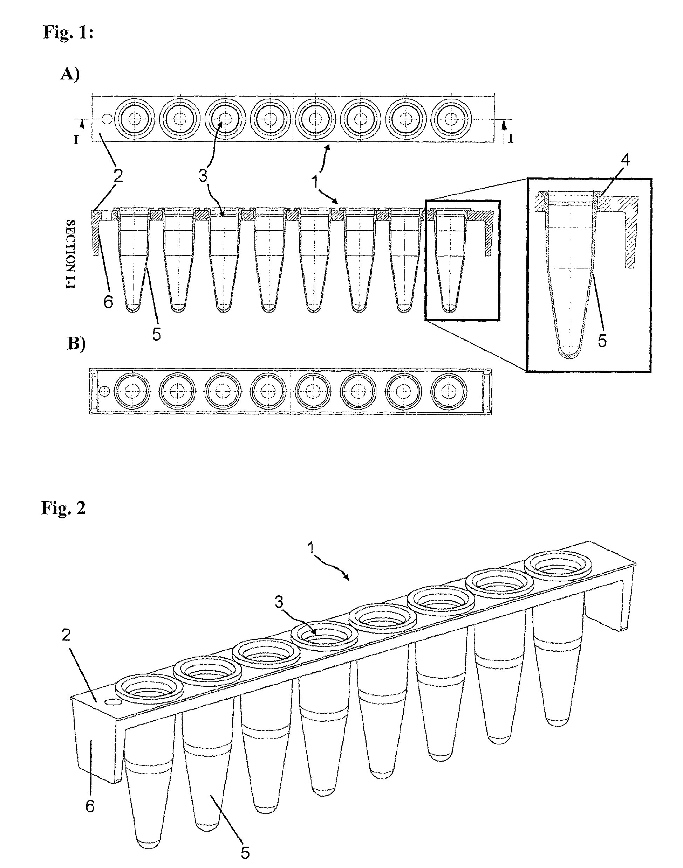

**Figure 1** shows a preferred embodiment of the present invention. A) Top view of a preferred multiwell strip (1) and a sectional view including a magnification of a single well (3) joined with the top surface (4) of the frame portion (2) so that the receiving portion (5) of the well is beneath said top surface. B) Bottom
**Figure 2** is an overall perspective view of a preferred multiwell strip (1) according to the present invention.

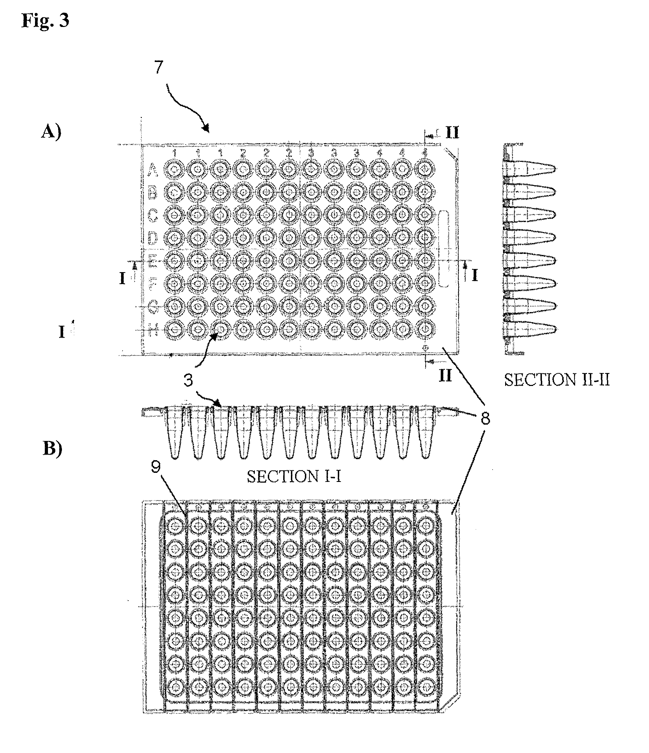

**Figure 3** shows a preferred embodiment of the multiwell-frame (7) according to the present invention, which shall not limit the present invention. A) Top view and sectional views of a preferred multiwell-frame (7) comprising a frame portion (8) and a plurality of wells (3) arranged in a rectangular pattern. In this embodiment each column of wells (3) is separated by predetermined breaking lines (9).

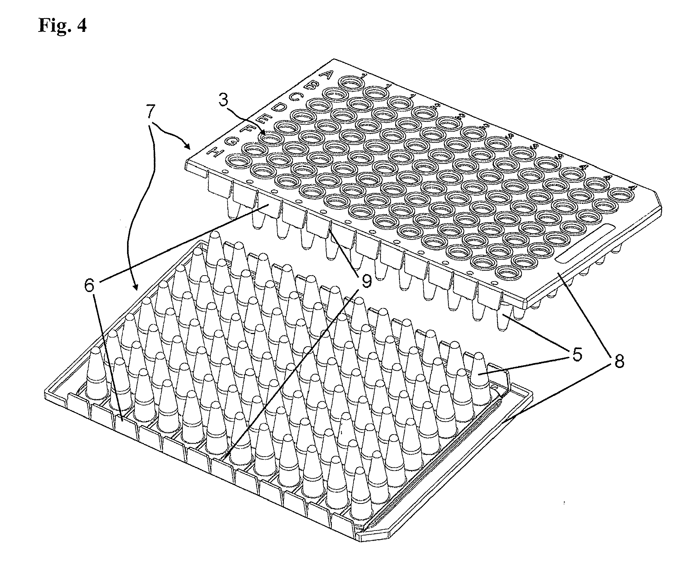

**Figure 4** is an overall perspective view of a preferred multiwell-frame (7) according to the present invention. In this embodiment the frame wall (6) is disrupted at the positions of predetermined breaking lines (9).

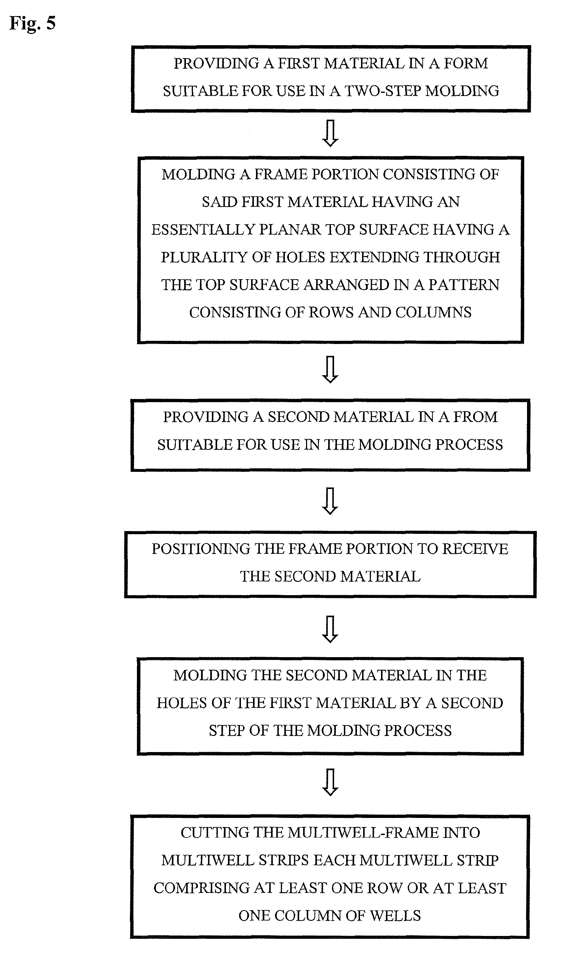

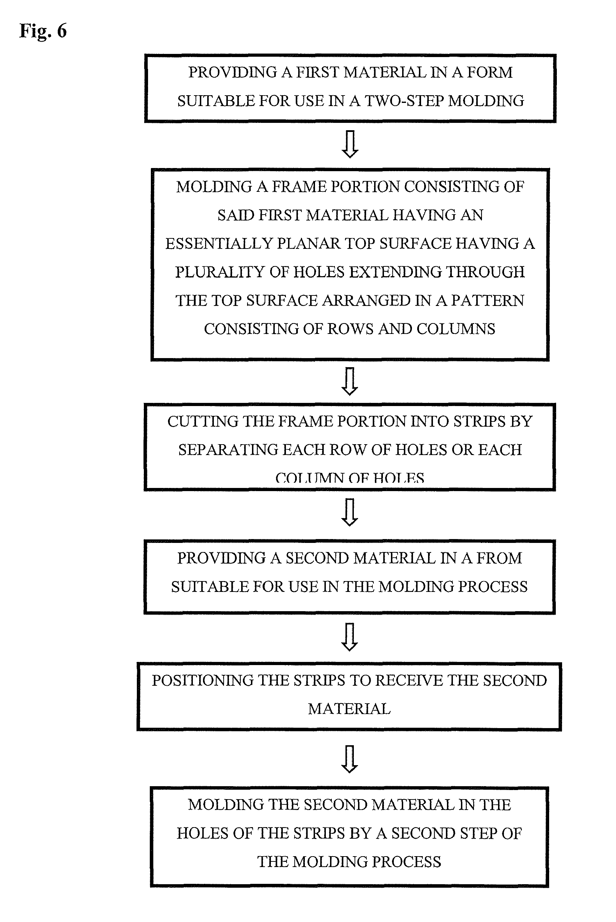

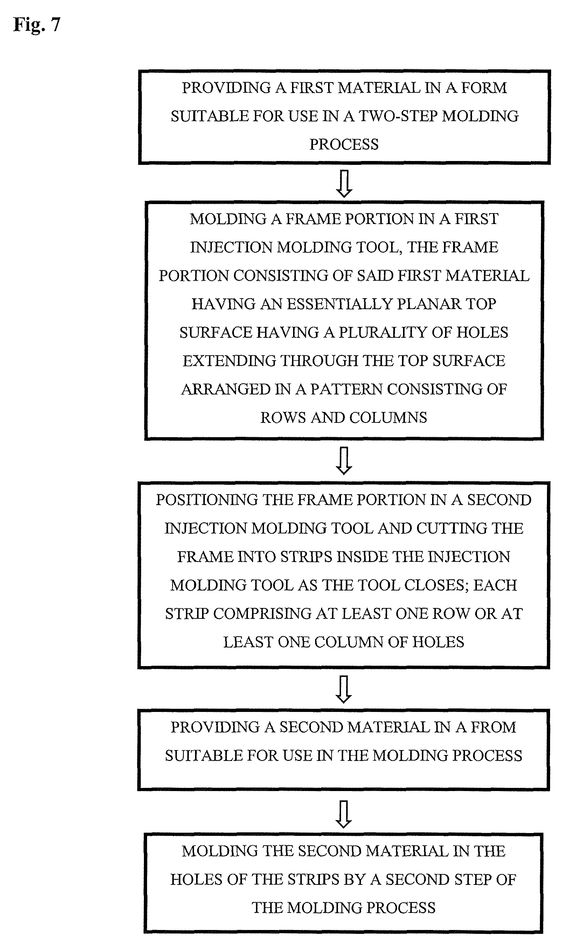

**Figure 5 to 7** show sequences of steps of preferred methods for producing a multiwell strip (1) according to the present invention.

## Claims

1. A multi well strip (1) comprising:
a frame portion (2) consisting of a first material,
a plurality of wells (3) consisting of a second material
wherein the frame portion (2) has an essentially planar top surface having a plurality of holes extending through said top surface arranged in a line; wherein the wells (3) extend downwardly through the plurality of holes in the frame portion (2) and are joined with the top surface (4) of the frame portion (2) so that the receiving portions (5) of the wells (3) are beneath the top surface, wherein the first material and the second material are different and the first material is stiffer than the second material; wherein each multiwell strip (1) comprises at least one row or at least one column of wells (3); wherein the receiving portions (5) of the wells (3) have a wall-thickness of 0.05 mm to 0.5 mm; and the second material is polypropylene; and **characterized in that** the first material is cycloolefine polymer or cycloolefine copolymer.

2. The multiwell strip (1) according to any one of claims 1, wherein the frame portion (2) comprises a frame wall (6) on at least one side.

3. The multi well strip (1) according to any one of claims 1 or 2, wherein the first material and the second material have different colours.

4. A multiwell-frame (7) for obtaining a multiwell strip (1) according to any one of claims 1 to 3 comprising:
a frame portion (8) consisting of a first material, having a essentially planar top surface having a plurality of holes extending through the top surface arranged in a rectangular pattern consisting of rows and columns;
a plurality of wells (3) consisting of a second material joined with the top surface of the frame portion (8),
wherein the plurality of wells (3) extend downwardly through the plurality of holes in the frame portion (8);
wherein the first material and the second material are different and the first material is stiffer than the second material;
and wherein the frame portion (8) comprises predetermined breaking lines (9) separating each row and/or each column of wells (3),
wherein the receiving portions (5) of the wells (3) have a wall-thickness of 0.05 mm to 0.5 mm; and wherein the first material is cycloolefine polymer or cycloolefine copolymer and the second material is polypropylene.

5. The multiwell-frame (7) according to claim 4, wherein the rectangular pattern consists 2 by 8, or 3 by 32 or 4 by 6, or 8 by 12 holes/wells (3), or 16 by 24 holes/wells (3), or 32 by 48 holes/wells (3), or 2 to 31 by 48 holes/wells (3), or 2 to 47 by 32 holes/wells (3), or 2 to 7 by 12 holes/wells (3), or 2 to 11 by 8 holes/wells (3), or 2 to 15 by 24 holes/wells (3), or 2 to 23 by 16 holes/wells (3).

6. The multiwell-frame (7) according to claim 4or 5, wherein the first material and the second material have different colours.

7. The multiwell-frame (7) according to any one of claims 4to 6, wherein the first material has a colour selected from the group consisting of blue, green, yellow, red, violet, black, white, and orange, or is essentially transparent; and wherein the second material is essentially transparent or is black or white.

8. A method for producing a multi well strip (1) according to any one of claims 1 to 3 comprising the following steps:
(a) producing a multiwell-frame (7) comprising the steps of:
providing a first material in a form suitable for use in a two-step molding process;
molding a frame portion (8) consisting of said first material having an essentially planar top surface having a plurality of holes extending through the top surface arranged in a pattern consisting of rows and columns;
providing a second material in a form suitable for use in the molding process,
positioning the frame or frame portion (8) to receive the second material;
molding the second material in the holes of the first material by a second step of the molding process; and
(b) cutting the multiwell-frame (7) produced in step (a) into multiwell strips (1) each multiwell strip (1) comprising at least one row or at least one column of wells (3);
wherein the receiving portions (5) of the wells (3) have a wall-thickness of 0.05 mm to 0.5 mm; and wherein the first material is cycloolefine polymer or cycloolefine copolymer and the second material is polypropylene.

9. The use of a multiwell strip (1) according to any one of claims 1 to 3 or a multiwell frame (7) according to any one of claims 4 to 7 in research procedures and diagnostic techniques.

10. The use according to claim 9, wherein the research procedure and/or diagnostic technique is selected from the group consisting of amplification of nucleic acids, PCR, ELISA, sequencing, high content screening, crystallography, melt curve determination, hybridisation related assays, *in-vitro* translation, *in-vitro* transcription, cell-culturing, enzymatic assays.

## Patentansprüche

1. Ein Multi-Gefäß Streifen (1) umfassend:
ein Rahmenteil (2) bestehend aus einem ersten Material,
eine Mehrzahl von Gefäßen (3) bestehend aus einem zweiten Material
wobei das Rahmenteil (2) eine im wesentlichen ebene Oberfläche hat, die eine Mehrzahl von sich durch diese ebene Oberfläche ausdehnende und auf einer Linie angeordnete Löchern hat; wobei die Gefäße (3) sich nach unten durch die Mehrzahl von Löchern in dem Rahmenteil (2) ausdehnen und mit der oberen Fläche (4) des Rahmenteils (2) verbunden sind, so dass die Aufnahmeteile (5) der Gefäße (3) unter der oberen Fläche sind; wobei das erste Material und das zweite Material unterschiedlich sind und das erste Material steifer als das zweite Material ist; wobei jeder Multi-Gefäß Streifen (1) zumindest eine Reihe oder zumindest eine Spalte von Gefäßen (3) umfasst; wobei die Aufnahmeteile (5) der Gefäße (3) eine Wanddicke von 0,05 mm bis 0,5 mm haben; und das zweite Material Polypropylen ist; und **dadurch gekennzeichnet, dass** das erste Material Cycloolefin-Polymer oder Cycloolefin-Copolymer ist.

2. Der Multi-Gefäß Streifen (1) nach Anspruch 1, wobei das Rahmenteil (2) eine Rahmenwand (6) auf mindestens einer Seite umfasst.

3. Der Multi-Gefäß Streifen (1) nach einem der Ansprüche 1 oder 2, wobei das erste Material und das zweite Material verschiedene Farben haben.

4. Ein Multi-Gefäß Rahmen (7) zum Erhalten einem Multi-Gefäß Streifen (1) nach einem der Ansprüche 1 bis 3, umfassend:
ein Rahmenteil (8) bestehend aus einem ersten Material, das eine im wesentlichen ebene Oberfläche hat, die eine Mehrzahl von Löchern hat, die sich durch die obere Fläche in einem rechteckigen Muster aus Reihen und Spalten angeordnet ausdehnen;
eine Mehrzahl von Gefäßen (3) bestehend aus einem zweiten Material und verbunden mit der oberen Fläche des Rahmenteils (8),
wobei die Mehrzahl von Gefäßen (3) sich nach unten durch die Mehrzahl von Löchern in dem Rahmenteil (8) ausdehnen;
wobei das erste Material und das zweite Material unterschiedlich sind und das erste Material steifer als das zweite Material ist;
und wobei das Rahmenteil (8) Sollbruchlinien (9), die jede Zeile und/oder jeder Spalte von den Gefäßen (3) trennt, umfasst,
wobei die Aufnahmeteile (5) der Gefäße (3) eine Wanddicke von 0,05 mm bis 0,5 mm haben; und wobei das erste Material Cycloolefin-Polymer oder Cycloolefin-Copolymer ist und das zweite Material Polypropylen ist.

5. Der Multi-Gefäß Rahmen (7) nach Anspruch 4, wobei das rechteckige Muster aus 2 mal 8, oder 3 mal 32 oder 4 mal 6, oder 8 mal 12 Löchern/Gefäßen (3), oder 16 mal 24 Löchern/Gefäßen (3), oder 32 mal 48 Löchern/Gefäßen (3), oder 2 bis 31 mal 48 Löchern/Gefäßen (3), oder 2 bis 47 mal 32 Löchern/Gefäßen (3), oder 2 bis 7 mal 12 Löchern/Gefäßen (3), oder 2 bis 11 mal 8 , oder 2 bis 15 mal 24 Löchern/Gefäßen (3), oder 2 bis 23 mal 16 Löchern/Gefäßen (3) besteht.

6. Der Multi-Gefäß Rahmen (7) nach Anspruch 4 oder 5, wobei das erste Material und das zweite Material verschiedene Farben haben.

7. Der Multi-Gefäß Rahmen (7) nach einem der Ansprüche 4 bis 6, wobei das erste Material eine Farbe ausgewählt aus der Gruppe bestehend aus Blau, Grün, Gelb, Rot, Violett, Schwarz, Weiß, Orange hat, oder im wesentlichen transparent ist; und wobei das zweite Material im wesentlichen transparent oder schwarz oder weiß ist.

8. Ein Verfahren zur Herstellung eines Multi-Gefäß Streifens (1) nach einem der Ansprüche 1 bis 3, umfassend die folgenden Schritte:
(a) Herstellen eines Multi-Gefäß Rahmens (7), umfassend die Schritte:
Bereitstellen eines ersten Materials in einer Form geeignet zur Verwendung in einem zweistufigen Formverfahren;
Formen eines Rahmenteils (8) bestehend aus diesem ersten Material, das eine im wesentlichen ebene Oberfläche hat, die eine Mehrzahl von Löchern hat, die sich durch die obere Fläche in einem rechteckigen Muster aus Reihen und Spalten angeordnet ausdehnen;
Bereitstellen eines zweiten Materials in einer Form geeignet zur Verwendung in dem Formverfahren,
Positionierung des Rahmens oder Rahmenteils (8) um das zweite Material zu erhalten;
Formen des zweiten Materials in die Löcher des ersten Materials durch einen zweiten Schritt des Formprozesses; und
(b) Schneiden des im Schritt (a) hergestellten Multi-Gefäß Rahmens (7) in Multi-Gefäß Streifen (1), jeder Multi-Gefäß Streifen (1) umfassend zumindest eine Reihe oder zumindest eine Spalte von Gefäßen (3);
wobei die Aufnahmeteile (5) der Gefäße (3) eine Wanddicke von 0,05 mm bis 0,5 mm haben; und wobei das erste Material Cycloolefin-Polymer oder Cycloolefin-Copolymer ist und das zweite Material Polypropylen ist.

9. Die Verwendung eines Multi-Gefäß Streifens (1) nach einem der Ansprüche 1 bis 3 oder eines Multi-Gefäß-Rahmens (7) nach einem der Ansprüche 4 bis 7, in Forschungsverfahren und Diagnosetechniken.

10. Die Verwendung nach Anspruch 9, wobei das Forschungsverfahren und/oder die Diagnosetechnik ausgewählt ist aus der Gruppe die die Amplifikation von Nukleinsäuren, PCR, ELISA, high content screening, Kristallographie, Schmelzkurvenbestimmung Hybridisierungsassays, in vitro Translation, in vitro Transkription, Zellkultivierung, und enzymatische Versuche umfasst.

## Revendications

1. Une barrette à puits multiples (1) comprenant:
une partie formant un cadre (2) constitué d'un premier matériau,
une pluralité de puits (3) constitués d'un second matériau
où la partie formant un cadre (2) a une surface supérieure essentiellement plane avec une pluralité de trous s'étendant à travers ladite surface supérieure et agencés sur une ligne ; où les puits (3) s'étendent vers le bas à travers la pluralité de trous dans la partie formant un cadre (2) et sont reliés à la surface supérieure (4) de la partie formant un cadre (2) de sorte que les partie réceptrices (5) des puits (3) soit au-dessous de la surface supérieure ; où le premier matériau et le second matériau sont différents et le premier matériau est plus rigide que le second matériau ; où chaque barrette à puits multiples (1) comprend au moins une rangée ou au moins une colonne de puits (3) ; où les parties réceptrices (5) des puits (3) ont une épaisseur de paroi de 0,05 mm à 0,5 mm ; et le second matériau est du polypropylène ; et **caractérisée en ce que** le premier matériau est un polymère de cyclooléfine ou un copolymère de cyclooléfine.

2. La barrette à puits multiples (1) selon la revendication 1, où la partie formant le cadre (2) comprend une paroi de cadre (6) sur au moins un côté.

3. La barrette à puits multiples (1) selon l'une quelconque des revendications 1 ou 2, où le premier matériau et le second matériau sont de différentes couleurs.

4. Un cadre à puits multiples (7) pour obtenir une barrette à puits multiples (1) selon l'une quelconque des revendications 1 à 3 comprenant:
une partie formant un cadre (8) constitué d'un premier matériau ayant une surface supérieure essentiellement plane, ayant une pluralité de trous s'étendant à travers ladite surface supérieure, disposés selon une configuration rectangulaire composée de rangées et de colonnes ;
une pluralité de puits (3) constitués d'un second matériau reliés à la surface supérieure de la partie formant le cadre (8),
où la pluralité de puits (3) s'étendent vers le bas à travers la pluralité de trous dans la partie formant le cadre (8) ;
où le premier matériau et le second matériau sont différents et le premier matériau est plus rigide que le second matériau ;
et où la partie formant le cadre (8) comprend des lignes de rupture prédéterminées (9) séparant chaque rangée et/ou chaque colonne de puits (3),
où les parties réceptrices (5) des puits (3) ont une épaisseur de paroi de 0,05 mm à 0,5 mm ; et où le premier matériau est un polymère de cyclooléfine ou un copolymère de cyclooléfine et le second matériau est du polypropylène.

5. Le cadre à puits multiples (7) selon la revendication 4, où la configuration rectangulaire consiste en 2 fois 8, ou 3 fois 32, ou 4 fois 6, ou 8 fois 12 trous/puits (3), ou 16 fois 24 trous/puits (3) ou de 2 à 7 fois 12 trous/puits (3), ou de 2 à 11 fois 8 trous/puits (3), ou de 2 à 15 fois 24 trous/puits (3), ou de 2 à 23 fois 16 trous/puits (3).

6. Le cadre à puits multiples (7) selon l'une quelconque des revendications 4 ou 5, où le premier matériau et le second matériau sont de couleurs différentes.

7. Le cadre à puits multiples (7) selon l'une quelconque des revendications 4 à 6, où le premier matériau est d'une couleur sélectionnée du groupe consistant en bleu, vert, jaune, rouge, violet, noir, blanc et orange, ou est essentiellement transparent ; et où le second matériel est essentiellement transparent ou est noir ou blanc.

8. Une méthode pour produire une barrette à puits multiples (1) selon l'une quelconque des revendications 1 à 3 comprenant les étapes suivantes :
(a) produire un cadre à puits multiples (7) comprenant les étapes :
fournir un premier matériau sous une forme appropriée pour l'utilisation dans un procédé de moulage en deux étapes;
moulage d'une partie formant un cadre (8) constitué dudit premier matériau ayant une surface supérieure essentiellement plane, ayant une pluralité de trous s'étendant à travers la surface supérieure disposés selon une configuration consistant en rangées et colonnes ;
fournir un second matériau sous une forme appropriée pour l'utilisation dans le procédé de moulage,
positionner le cadre ou la partie formant le cadre (8) pour recevoir le second matériau ;
moulage du second matériau dans les trous du premier matériau par une seconde étape du procédé de moulage; et
(b) couper le cadre à puits multiples (7) produit par l'étape (a) en des barrettes à puits multiples (1), chaque barrette à puits multiples (1) comprenant au moins une rangée ou au moins une colonne de puits (3) ;
Où les parties réceptrices (5) des puits (3) ont une épaisseur de paroi de 0,05 mm à 0,5 mm ; et où le premier matériau est un polymère de cyclooléfine ou un copolymère de cyclooléfine et le second matériau est du polypropylène.

9. L'utilisation d'une barrette à puits multiples (1) selon l'une quelconque des revendications 1 à 3 ou d'un cadre à puits multiples (7) selon l'une quelconque des revendications 4 à 7 dans des procédures de recherche et des techniques de diagnostic.

10. L'utilisation selon la revendication 9, où la procédure de recherche et/ou la technique de diagnostic est sélectionnée du groupe consistant en amplification d'acides nucléiques, PCR, ELISA, séquençage, criblage à débit élevé, cristallographie, détermination de la courbe de fusion, méthode expérimentale incluant une hybridation, traduction *in vitro,* transcription *in vitro,* culture cellulaire et méthodes expérimentale enzymatiques.
